(19) **Europäisches Patentamt**
**European Patent Office**
**Office européen des brevets**

(11) **EP 4 765 219 A1**

(12) **EUROPEAN PATENT APPLICATION**
published in accordance with Art. 153(4) EPC

(43) Date of publication:
24.06.2026 Bulletin 2026/26

(21) Application number: 24880113.6

(22) Date of filing: 16.10.2024

(51) International Patent Classification (IPC):
$H01M\ 4/13^{(2010.01)}$    $H01M\ 4/139^{(2010.01)}$
$H01M\ 4/62^{(2006.01)}$    $H01M\ 4/04^{(2006.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/13; H01M 4/139;
H01M 4/62; H01M 10/052; Y02E 60/10

(86) International application number:
PCT/KR2024/015690

(87) International publication number:
WO 2025/084776 (24.04.2025 Gazette 2025/17)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.10.2023 KR 20230138115

(71) Applicant: **LG Energy Solution, Ltd.**
**Seoul 07335 (KR)**

(72) Inventors:
• **SHIN, Dong Mok**
**Daejeon 34122 (KR)**
• **LEE, Ki Seok**
**Daejeon 34122 (KR)**
• **JANG, Eun Ji**
**Daejeon 34122 (KR)**
• **JEONG, Yoon Gyeong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE MIXTURE FILM, MANUFACTURING METHOD THEREFOR, AND LITHIUM SECONDARY BATTERY COMPRISING SAME**

(57) The present invention relates to an electrode mixture film including an electrode active material, a conductive material, and a fiberizable binder, wherein the electrode mixture film includes a side portion positioned at both ends in a width direction of the electrode mixture film, and a central portion disposed between the side portions, and the crystallinity of a binder included in the central portion is higher than the crystallinity of a binder included in the side portions.

FIG. 1

**Description**

**TECHNICAL FIELD**

**Cross-reference to Related Applications**

This application claims the benefit of Korean Patent Application No. 10-2023-0138115, filed on October 16, 2023, in the Korean Intellectual Property Office, the disclosure of which is incorporated herein in its entirety by reference.

**Technical Field**

The present invention relates to an electrode mixture film, a method for manufacturing the same, and a dry electrode and a lithium secondary battery including the same.

**BACKGROUND ART**

A secondary battery is applied and used in small products such as digital cameras, P-DVDs, MP3Ps, mobile phones, PDAs, portable game devices, power tools, and e-bikes, as well as large products that require high power, such as electric vehicles or hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to form an electrode active material layer, and then performing drying and roll-pressing processes thereon to manufacture a positive electrode and a negative electrode, followed by stacking the positive electrode and the negative electrode on both sides of a separator to form an electrode assembly having a predetermined shape, and then accommodating the electrode assembly in a battery case, followed by injecting an electrolyte thereinto and sealing the case.

Meanwhile, in the process of drying the electrode active material, a solvent contained in the slurry evaporates, which may cause defects such as pinholes or cracks on the electrode active material layer formed on the current collector. In addition, since the inside and outside of the electrode active material slurry are not uniformly dried in the drying process, there is a risk that the quality of the electrode is degraded due to a powder floating phenomenon caused by the difference in solvent evaporation rate, that is, the phenomenon in which powder in a portion dried first rises, thereby forming a gap with a portion dried relatively later.

In order to solve the above-described problem, a drying apparatus and the like capable of adjusting the evaporation rate of a solvent are being considered such that the inside and outside of an electrode active material slurry are uniformly dried, but such drying apparatuses are very expensive and cost a significant amount of money and time in operation, and thus are disadvantageous in terms of manufacturing processability.

On the other hand, a solvent included in a typical electrode active material slurry is N-methyl-2-pyrrolidone (NMP), which has a high boiling point, so that it requires high heat energy and a very long drying furnace to dry the solvent, making it very disadvantageous in mass production. In addition, N-methyl-2-pyrrolidone (NMP) is a toxic material and is harmful to living things, and thus, has a disadvantage of not being environmentally friendly.

Therefore, recently, research on a dry electrode in which an electrode is manufactured without using a solvent has been actively conducted. The dry electrode is generally manufactured by laminating a free-standing type electrode mixture film, which includes an electrode active material, a binder, a conductive material, etc., on a current collector. The manufacturing of the above-described electrode mixture film includes a process of first mixing the electrode active material, a carbon material as the conductive material, and a fiberizable binder together by a blender or the like, and fiberizing the binder by imparting shear force thereto through a process such as jet-milling or kneading, and then calendarizing an obtained mixture into a film form to manufacture a free-standing film.

However, in the case of a method for manufacturing an electrode mixture film by using a typical calendaring method, there are problems in that edges of both ends in a width direction of the electrode mixture film are not uneven, and non-uniform sawtooth-shaped defective portion is generated. The sawtooth-shaped defective portion may accelerate the generation of cracks of the electrode mixture film, and furthermore, may cause breakage of the electrode mixture film, so that an excessive slitting process is required to remove the same.

If the excessive slitting process is performed, there are disadvantage in that the width of the electrode mixture film is significantly reduced compared to the initial width thereof due to the width of the defective portion, and the width of the calendaring roll is required to be widened to implement a target width of the electrode mixture film, and the electrode mixture film having a uniform width cannot be continuously manufactured. In addition, the larger the portion removed through the slitting process, the greater the loss of an electrode material, so that there is a disadvantage of increasing the manufacturing cost of an electrode.

Therefore, there is a need to develop an electrode mixture film in which an edge defective portion at both ends in a width direction of the electrode mixture film is minimized.

## DISCLOSURE OF THE INVENTION

### TECHNICAL PROBLEM

An aspect of the present invention provides an electrode mixture film in which an edge defective portion at both ends in a width direction of the electrode mixture film is minimized, and a lithium secondary battery including the electrode mixture film.

Another aspect of the present invention provides a method for manufacturing an electrode mixture film, the method capable of minimizing an edge defective portion at both ends in a width direction of the electrode mixture film, reducing the amount of the electrode mixture film removed when performing a slitting process, manufacturing the electrode mixture film as wide as possible only by a narrow calendaring roll width, and recycling the removed electrode mixture film.

### TECHNICAL SOLUTION

[1] The present invention provides an electrode mixture film including an electrode active material, a conductive material, and a fiberizable binder, wherein the electrode mixture film includes a side portion positioned at both ends in a width direction of the electrode mixture film, and a central portion disposed between the side portions, and the crystallinity of a binder included in the central portion is higher than the crystallinity of a binder included in the side portions.

[2] In [1] above, in the present invention, the width of the side portion may each independently be 0.1% to 40% of the width of the electrode mixture film from both ends in the width direction of the electrode mixture film.

[3] In [1] or [2] above, in the present invention, the crystallinity of the binder included in the central portion may be 5% to 40%.

[4] In at least one among [1] to [3] above, in the present invention, the crystallinity of the binder included in the side portions may be 4.5% or less.

[5] In at least one among [1] to [4] above, in the present invention, the electrode active material may have an average particle diameter ($D_{50}$) of 0.1 $\mu$m to 5 $\mu$m.

[6] The present invention provides a method for manufacturing an electrode mixture film, the method including (S1) a step of obtaining each of powder for a first electrode and powder for a second electrode, each of which includes an electrode active material, a conductive material, and a fiberizable binder, and (S2) a step of introducing the powder for a first electrode and the powder for a second electrode to a calendar roll divided into three or more partitions in a width direction by a dam, wherein the crystallinity of the binder included in the powder for a first electrode of the (S1) above is higher than the crystallinity of the binder included in the powder for a second electrode thereof, and the powder for a first electrode is introduced to a central portion of the roll of the (S2) above, and the powder for a second electrode is introduced to a side portion of the roll of the (S2) above positioned at both ends of the central portion of the roll.

[7] In [6] above, in the present invention, the calendar roll in the (S2) above may be divided into three partitions in the width direction by the dam, and the lengths of the side portions may each independently be 1% to 45% of the length of the central portion.

[8] In [6] or [7] above, in the present invention, the lengths of the side portions may each independently be 1% to 45% of the length of the central portion.

[9] In at least one among [6] to [8] above, in the present invention, the powder for a first electrode and the powder for a second electrode may each independently be prepared by a method including (a) a step of preparing a mixture composition including an electrode active material, a conductive material, and a fiberizable binder, and (b) a step of kneading the mixture composition under a temperature condition of 70 °C to 200 °C to prepare a mixed aggregate.

[10] In [9] above, in the present invention, the kneading of the (b) above may be performed at a rotation speed of 100 rpm or less at a temperature of 70 °C to 200 °C.

[11] In [9] or [10] above, in the present invention, kneading may be performed for a shorter period of time to prepare the powder for a first electrode than to prepare the powder for the second electrode.

[12] In at least one among [6] to [11] above, in the present invention, the crystallinity of the binder included in the powder for a first electrode may be from 5% to 40%, and the crystallinity of the binder included in the powder for a second electrode may be from 8% or less.

[13] In at least one among [6] to [12] above, in the present invention, the method may further include (S3) being a step of removing a side portion of a film manufactured after the (S2) above, wherein the widths of the side portions may each independently be 10% or less of the width length of an electrode mixture film manufactured after the (S2) above.

[14] The present invention provides a lithium secondary battery including a dry electrode having at least one electrode mixture film among [1] to [5] above.

## ADVANTAGEOUS EFFECTS

An electrode mixture film according to the present invention is characterized by adjusting the crystallinity of a binder included in a central portion of the electrode mixture film and the crystallinity of a binder included in side portions thereof. Through this, while minimizing the defect rate of the side portion, it is possible to control the electrode mixture film to have a constant width, and the electrode mixture film is excellent in both tensile strength and elongation at break.

In addition, according to a method for manufacturing an electrode mixture film according to the present invention, an electrode mixture film had all of the above-described advantages, and has a side portion which also includes an electrode active material, and thus, may be recycled as electrode powder, and the side portion removed during slitting may be minimized, so that the processability is excellent.

## BEST DESCRIPTION OF THE DRAWING

The drawings attached herein illustrate preferred embodiments of the present invention by example, and serve to enable technical concepts of the present invention to be further understood together with detailed description of the invention given below, and therefore the present invention is interpreted only with matters in such drawings. Meanwhile, the shape, size, scale, or ratio of elements in the drawings included in the present specification may be exaggerated to emphasize a more clear description.

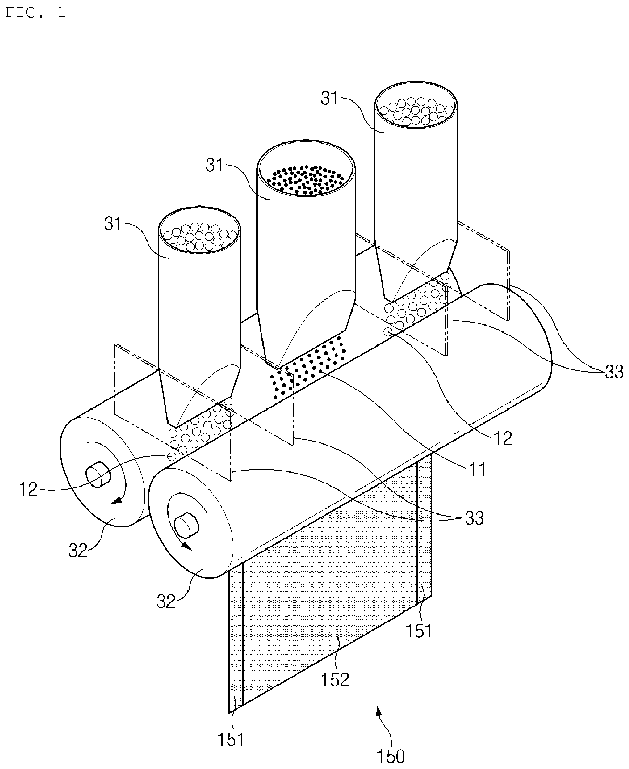

FIG. 1 is a schematic view of a method for manufacturing an electrode mixture film according to an embodiment of the present invention, and an electrode mixture film manufactured thereby.

FIG. 2 is a schematic view of a method for manufacturing an electrode mixture film according to an embodiment of the present invention, and an electrode mixture film manufactured thereby.

FIG. 3 is a schematic view of a method for manufacturing an electrode mixture film according to Comparative Example 1, and an electrode mixture film manufactured thereby.

FIG. 4 is a photograph of an electrode mixture film manufactured in Example 1.

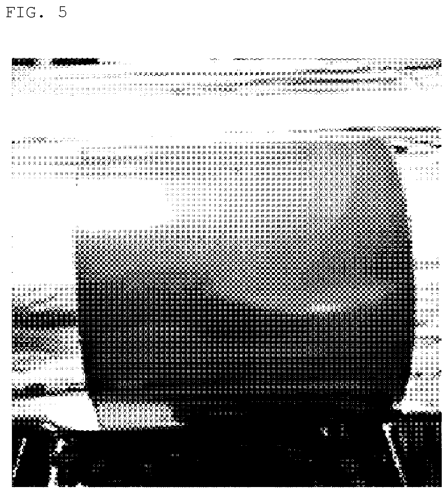

FIG. 5 is a photograph of an electrode mixture film manufactured in Example 3.

FIG. 6 is a photograph of an electrode mixture film manufactured in Comparative Example 1.

## MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, the machine direction (MD) refers to the longitudinal direction of an electrode mixture film, and the transverse direction (TD) refers to the width direction of the electrode mixture film.

In the present invention, an average particle diameter $D_{50}$ means a particle diameter corresponding to 50% of the volume accumulation in a particle diameter distribution curve of particles. The $D_{50}$ may be measured by, for example, a laser diffraction method. The laser diffraction method generally enables measurement of a particle diameter from a sub-micron region to several millimeters, so that results of high reproducibility and high resolution may be obtained.

In the present invention, crystallinity (Xc) may be measured by differential scanning calorimetry (DSC), and based on the temperature (peak temperature) at a point of time at which the highest enthalpy is exhibited during crystallization, the crystallinity may be calculated by [Equation 1] below in which an enthalpy of melting ($\Delta Hm$) value actually measured by DSC is divided by an enthalpy of melting ($\Delta Hm^O$) (equilibrium heat of fusion) value of a theoretically perfect crystal (100% crystallinity), and expressing as a %. Here, the enthalpy of melting value ($\Delta Hm^O$) of a theoretically perfect crystal may be referred to a polymer handbook (J. Brandrup et al., 2003) or academic papers such as Polymer. For example, an enthalpy of melting value of a PTFE theoretically perfect crystal is 85.4 J/g (Polymer Journal Vol. 46, 8872~8882, 2005). Meanwhile, typically, thermal analysis of polymers such as DSC may be measured and calculated according to ASTM D3418-21.

[Equation 1]

$$Xc(\%) = \left( \frac{\Delta H_m}{\Delta H_m^o} \right) \times 100$$

In the present specification, "mixture composition" means a mixture including an electrode active material, a conductive material, and a fiberizable binder, which have been physically mixed to a uniform dispersion phase, and may be a mixture in a powder phase as a product of a mixing process (mixing process) in accordance with the present specification, and may be one in which no solvent is substantially involved. Here, the meaning of no substantial involvement of a solvent means that when the mixture composition is obtained by mixing, a solvent is not introduced or only a trace amount of solvent is introduced.

In the present specification, "mixed aggregate" is a product of a kneading process (kneading process) in accordance with the present specification, in which the mixture composition is subjected to shear force, thereby fiberizing the binder to allow the mixture in the powder state to be bonded or connected to each other and converted into a mixed aggregate in a paste state, wherein the product is 100% solid.

In the present specification, "powder for an electrode" may refer to a material in a state in which the mixed aggregate is pulverized, thereby having a smaller particle size and being in a powder phase, and it may mean an electrode material in a powder form including an electrode active material and a binder, and optionally a conductive material.

In the present specification, an "electrode mixture film" may refer to one manufactured in the form of a free-standing type single sheet by using an "electrode mixture" including an electrode active material, a conductive material, and a binder, without the involvement of a solvent, or refer to an electrode mixture layer in the state of being laminated on a current collector. In the present specification, the term 'free-standing type' means that it can maintain its independent form without relying on other members, and that it can move or handle on its own. As to be described below, the electrode mixture film may be formed by pressing the powder for an electrode. For example, the electrode mixture film may have a shape in which powder for an electrode powder is integrated by pressing, thereby having a layered structure.

In the present specification, a "powder-sheeting film" refers to a film from the time the powder for an electrode forms a sheet form through a powder-sheeting process in which the powder for an electrode first passes through a roll-pressing roll in a roll-to-roll process until the time the sheet passes through the last roll-pressing roll in the process, and may be a free-standing sheet, but may be a sheet relatively weak in self-supporting force. Here, the 'powder-sheeting' means that powder for an electrode is molded into the form of a free-standing sheet by a roll-pressing roll of a roll-to-roll process, wherein the 'sheeting' is a process performed in a process of manufacturing the powder-sheeting film into an electrode mixture film, which may mean a process of roll-pressing the powder-sheeting film.

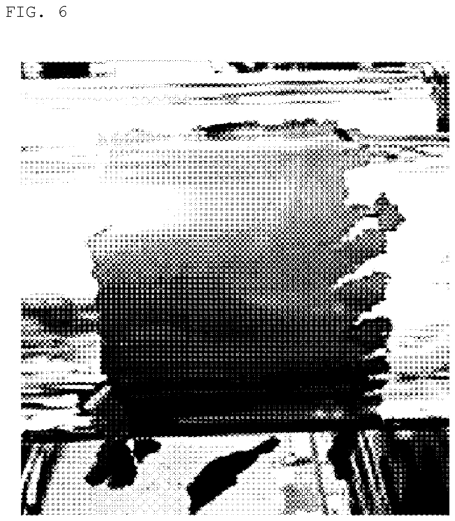

In the case of a typical electrode mixture film, as illustrated in [FIG. 6], there are problems in that edges of both ends in a width direction of the electrode mixture film are not uneven, and non-uniform sawtooth-shaped defective portion is generated. The sawtooth-shaped defective portion may accelerate the generation of cracks of the electrode mixture film, and furthermore, may cause breakage of the electrode mixture film, and if included in a battery, not only the uniformity of an electrode is poor, but also the electrochemical properties of the battery are significantly deteriorated, such as causing a reversal of the N/P ratio between positive and negative electrodes.

In order to solve the above-described problems, the inventors of the present invention have repeatedly conducted research on an electrode mixture film having fewer side portion defects of the electrode mixture film and excellent tensile strength and elongation at break, and found that it is possible to obtain an electrode mixture film having fewer side portion defects of the electrode mixture film and excellent tensile strength and elongation at break when the crystallinity of a binder in a central portion and side portions of an electrode mixture film satisfies a specific condition, and have completed the present invention.

**Electrode mixture film**

Hereinafter, an electrode mixture film according to the present invention will be described.

The electrode mixture film according to the present invention is an electrode mixture film including an electrode active material, a conductive material, and a fiberizable binder, wherein the electrode mixture film includes a side portion positioned at both ends in a width direction of the electrode mixture film, and a central portion disposed between the side portions, and the crystallinity of a binder included in the central portion is higher than the crystallinity of a binder included in the side portions.

The crystallinity of the binder in the center portion of the electrode mixture film is higher than the crystallinity of the binder in the side portions of the electrode mixture film. In the electrode mixture film, the crystallinity of a binder is lowered in a portion more fiberized, and the crystallinity of the binder is less lowered in a portion less fiberized.

Depending on the degree of fiberization of the electrode mixture film, the degree of the sawtooth-shaped defective portion generated in the side portions of the electrode mixture film may vary.

For example, if the degree of fiberization of an electrode mixture film is low (if the crystallinity of the binder is high), there may be a large amount of thick fibers, and a large amount of crystalline binders in the electrode mixture film. Therefore, when a shear force is applied to manufacture an electrode mixture film, force of holding particles together is relatively large, so that a limit point for withstanding breakage may be high. However, if a shear force exceeding the limit point is applied, there may be breakage, and in proportion to the stress applied during the time, there may be a wide and long broken portion, i.e., a wide and long sawtooth-shaped defective portion.

On the contrary, if the degree of fiberization of an electrode mixture film is high (if the crystallinity of the binder is low), there may be a large amount of thin fibers, and a small amount of crystalline binders in the electrode mixture film. Therefore, when a shear force is applied to manufacture an electrode mixture film, a limit point for withstanding breakage may not be high, so that even if there is breakage, there may be a narrow and short sawtooth-shaped defective portion.

Therefore, in order to make the sawtooth-shaped defective portion as narrow and short as possible, the degree of fiberization of the electrode mixture film is required to be high (the crystallinity of the binder is required to be low), but in this case, the force holding particles together is small, so that the tensile strength and elongation at break of the electrode mixture film are low. The electrode mixture film having a low tensile strength and a low elongation at break is not capable of withstanding a large force applied by equipment during a film manufacturing process, and thus may have a problem of entire breakage. In addition, if the manufacturing speed is increased in order to improve the productivity of films, a greater force is applied to a film, so that there may be a problem in that the probability of breakage may be further increased, thereby deteriorating processibility.

In the present invention, in order to make the sawtooth-shaped defective portion as narrow and short as possible, a side portion more fiberized having a predetermined width, and a central portion less fiberized having a predetermined width are applied to an electrode mixture film in order to withstand a large force applied during a manufacturing process.

In the electrode mixture film according to the present invention, a region more fiberized is positioned in the side portion of the electrode mixture film, so that sawtooth-shaped defects appearing in the side portion of the electrode mixture film are reduced. In addition, a region less fiberized is positioned in the central portion of the electrode mixture film, so that the tensile strength and the elongation at break of the electrode mixture film are excellent.

In this case, the crystallinity of the binder in the central portion and side portions of the electrode mixture film may be controlled by a method in which kneading and pulverization conditions, and the like are appropriately adjusted when preparing powder for an electrode to be described later, thereby adjusting the degree of fiberization of the powder for an electrode to introduce the powder for an electrode having different degrees of fiberization into the central portion and side portions, respectively.

Preferably, the crystallinity of the binder included in the central portion may be 5% to 40%, more preferably 10% to 35%, and even more preferably 15% to 30%. If the above-described range is satisfied, the electrode mixture film may have excellent properties in tensile strength and elongation at break, and thus, may withstand a large force applied by equipment during the manufacturing process, so that the breakage of the electrode mixture film may be prevented. In addition, the binder for binding electrode active materials is less disconnected, thereby preventing the electrode active materials from being detached from an electrode, so that it is possible to improve capacity properties and resistance properties.

Preferably, the crystallinity of the binder included in the side portion may be 4.5% or less, more preferably 4% or less, even more preferably 3% or less, even more preferably 2% or less, and even more preferably 1.5% or less. If the above-described range is satisfied, the generation of sawtooth-shaped defective portions appearing in the side portion of the electrode mixture film may be appropriately reduced, so that it is possible to improve electrochemical properties of a battery.

The widths of the side portions positioned at both ends in the width direction of the electrode mixture film may each independently be 0.1% to 40% of the width of the electrode mixture film from the both ends in the width direction of the electrode mixture film. Preferably, the side portions may each independently be 0.1% to 30%, more preferably 0.15% to 20%, and even more preferably 1% to 15% of the width of the electrode mixture film from both ends in the width direction of the electrode mixture film. If the above-described range is satisfied, sawtooth-shaped defective portions of a side portion of the electrode mixture film may be appropriately reduced, and the tensile strength and elongation at break properties of the electrode mixture film may be improved. For example, if the widths of the side portions are each independently less than a certain value of the width of the electrode mixture film from both ends in the width direction of the electrode mixture film, a sawtooth-shaped defective portion is formed to be longer in the side portions of the electrode mixture film, so that there are problems in terms of processibility in that electrochemical properties of a battery are reduced, an electrode mixture film having a predetermined width is not obtained, and an electrode mixture film has a width significantly smaller than that of the width of a calendaring roll. If the widths of the side portions are each independently larger than a certain value of the width of the electrode mixture film from both ends in the width direction of the electrode mixture film, the tensile strength and elongation at break of the electrode mixture film are low, so that there are problems in that the electrode mixture film is broken, or the binder for binding electrode active materials is disconnected, thereby reducing capacity properties and resistance properties of a battery.

Meanwhile, according to an embodiment of the present invention, the central portion and the side portion may each independently include an electrode active material, a conductive material, and a fiberizable binder. For example, the central portion may include an electrode active material, a conductive material, and a fiberizable binder, and the side portion may include an electrode active material, a conductive material, and a fiberizable binder. The electrode active material, the conductive material, and the fiberizable binder will be described later.

Meanwhile, in the present invention, the electrode mixture film may have a porosity of 20 vol% to 50 vol%, specifically 20 vol% to 40 vol%, and more specifically 25 vol% to 35 vol%. If the above-described range is satisfied, electrolyte solution impregnation is excellent, which may improve lifespan properties and output properties, and energy density may be excellent.

The porosity may be obtained using [Relation Equation 1] below by measuring the apparent density of the electrode mixture film, and using the actual density calculated based on the actual density and composition of each component.

Porosity (%) = {1-(apparent density/actual density)} X 100

## Method for manufacturing electrode mixture film

Hereinafter, the method for manufacturing an electrode mixture film will be described.

The method for manufacturing an electrode mixture film includes (S1) a step of obtaining each of powder for a first electrode and powder for a second electrode, each of which includes an electrode active material, a conductive material, and a fiberizable binder, and (S2) a step of introducing the powder for a first electrode and the powder for a second electrode to a calendar roll divided into three or more partitions in a width direction by a dam, wherein the crystallinity of the powder for a first electrode of the (S1) above is higher than the crystallinity of the powder for a second electrode thereof, and the powder for a first electrode is introduced to a central portion of the roll of the (S2) above, and the powder for a second electrode is introduced to a side portion positioned at both ends of the central portion of the roll.

Next, each step will be described in more detail.

(Step (S1))

This is a step of obtaining powder for a first electrode and powder for a second electrode each including an electrode active material, a conductive material, and a fiberizable binder, and the crystallinity of a binder included in the powder for a first electrode is higher than the crystallinity of a binder included in the powder for a second electrode.

The powder for a first electrode and the powder for a second electrode each independently include an electrode active material, a conductive material, and a fiberizable binder, and are not required to have the same composition.

The crystallinity of the binder included in the powder for a first electrode is higher than the crystallinity of the binder included in the powder for a second electrode thereof. Accordingly, the crystallinity of a binder in a central portion of the electrode mixture film may be high, and the crystallinity of a binder in a side portion of the electrode mixture film may be low, so that defective portions appearing in the side portion of the electrode mixture film may be appropriately reduced, and the tensile strength and elongation at break properties of the electrode mixture film may be improved.

Preferably, the crystallinity of the binder included in the powder for a first electrode may be 5% to 40%, specifically 10% to 35%, and more specifically 15% to 30%. If the above-described range is satisfied, the electrode mixture film may have excellent properties in tensile strength and elongation at break, and thus, may withstand a large force applied by equipment during the manufacturing process, so that the overall breakage of the electrode mixture film may be prevented. In addition, the binder is less disconnected, so that it is possible to prevent an electrode active material from being detached from an electrode.

Preferably, the crystallinity of the binder included in the powder for a second electrode may be 8% or less, specifically 7% or less, more specifically 6% or less, and even more specifically 5% or less. If the above-described range is satisfied, the generation of sawtooth-shaped defective portions appearing in the side portion of the electrode mixture film may be appropriately reduced, so that it is possible to improve electrochemical properties of a battery.

The electrode active material is not particularly limited as long as it is a commonly used electrode active material, and for example, the electrode active material may be a positive electrode active material or a negative electrode active material.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$,

etc.), a lithium-nickel-manganese-based oxide (e.g., $LiNi_{1-Y}Mn_YO_2$ (wherein 0<Y<1), $LiMn_{2-Z}Ni_ZO_4$ (wherein 0 < Z < 2), etc.), a lithium-nickel-cobalt-based oxide (e.g., $LiNi_{1-Y1}Co_{Y1}O_2$ (wherein 0<Y1<1), etc.), a lithium-manganese-cobalt-based oxide (e.g., $LiCo_{1-Y2}Mn_{Y2}O_2$ (wherein 0<Y2<1), $LiMn_{2-Z1}Co_{Z1}O_4$ (wherein 0 < Z1 < 2), etc.), a lithium-nickel-manganese-cobalt-based oxide (e.g., $Li(Ni_pCo_qMn_r)O_2$ (wherein 0 <p < 1, 0 < q< 1, 0 < r < 1, and p+q+r=1) or $Li(Ni_{p1}Co_{q1}Mn_{r1})O_4$ (wherein 0 < p1 < 2, 0 < q1 < 2, 0 < r1 < 2, and p1+q1+r1=2), etc.), or a lithium-nickel-cobalt-transition metal (M) oxide (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are each an atomic fraction of stand-alone elements, wherein 0 < p2 < 1, 0 < q2 < 1, 0 < r2 < 1, 0<s2<1, and p2+q2+r2+s2=1), etc.), lithium iron phosphate (e.g., $Li_{1+a}Fe_{1-x}M_x(PO_{4-b})X_b$ (wherein M is one or more selected from Al, Mg, and Ti, X is one or more selected from F, S, and N, and $-0.5 \leq a \leq 0.5$, $0 \leq x \leq 0.5$, and $0 \leq b \leq 0.1$), and the like, and any one thereof or a compound of two or more thereof may be included.

Among these, due to the fact that the capacity properties and stability of a battery may be increased, the lithium metal oxide may be $LiCoO_2$, $LiMnO_2$, $LiNiO_2$, a lithium nickel-manganese-cobalt oxide (e.g., $Li(Ni_{1/3}Mn_{1/3}CO_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, etc.), a lithium nickel cobalt aluminum oxide (e.g., $Li(Ni_{0.8}Co_{0.15}Al_{0.05})O_2$, etc.), a lithium nickel manganese cobalt aluminum oxide (e.g., $Li(Ni_{0.86}Co_{0.05}Mn_{0.07}Al_{0.02})O_2$), a lithium iron phosphate (e.g., $LiFePO_4$) or the like, and any one thereof or a mixture of two or more thereof may be used.

The negative electrode active material may include at least one selected from the group consisting of a lithium metal, a carbon material capable of reversibly intercalate/de-intercalate lithium ions, a metal or an alloy of the metal and lithium, a metal composite oxide, a material capable of doping and undoping lithium, and a transition metal oxide.

As the carbon material capable of reversibly intercalate/de-intercalate lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (Me: Mn, Fe, Pb, Ge; Me': Al, B, P, Si, elements in Group 1, Group 2, and Group 3 of the periodic table, halogen; $0<x \leq 1$; $1 \leq y \leq 3$; $1 \leq z \leq 8$) may be used.

The material capable of doping and undoping lithium may be Si, $SiO_x$ ($0<x \leq 2$), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with $SiO_2$ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

The electrode active material may have an average particle diameter ($D_{50}$) of 0.1 $\mu$m to 5.0 $\mu$m, specifically 0.2 $\mu$m to 4.0 $\mu$m, more specifically 0.3 $\mu$m to 3.0 $\mu$m, and even more specifically 0.4 $\mu$m to 2.5 $\mu$m. If the above-described range is satisfied, the average particle diameter of powder for an electrode may be uniform, when manufacturing an electrode mixture film, the film may be easily formed, and the tensile strength and elongation at break may be excellent. In addition, since it may be easy to evaluate the crystallinity of a binder, it may be easy to manufacture electrode mixture films having regions with different degrees of fiberization.

The conductive material is a component for further improving the conductivity of an electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used. Specifically, for uniform mixing and improvement in conductivity of the conductive material, one or more selected from the group consisting of activated carbon, graphite, carbon black, and carbon nanotube (CNT) may be included.

The fiberizable binder is not specifically specified as long as it can be fibrillated, and the fibrillation refers to a treatment of dividing a high molecular polymer into small pieces. For example, the fiberization may be performed using mechanical shear force, or the like, and the surface of a polymer fiber thus fibrillated is loosened to generate a large number of microfibers (fibrils). Examples of the fiberizable binder may include one or more selected from the group consisting of polytetrafluoroethylene (PTFE), and polyolefin, and may preferably include polytetrafluoroethylene (PTFE), and may more preferably include polytetrafluoroethylene (PTFE). Specifically, the polytetrafluoroethylene (PTFE) may be included in an amount of 60 wt% based on the total weight of the binder. At this time, the binder may further include one or more among polyethylene oxide (PEO), polyvinylidene fluoride (PVdF), polyvinylidene fluoride-cohexafluoropropylene (PVdF-HFP), and a polyolefin-based binder.

The powder for each electrode may be obtained by performing the following method, and powder for each electrode is not necessarily required to be prepared by the same method.

First, the electrode active material, the conductive material, and the fiberizable binder described above are mixed to obtain a composite composition. At this time, the above-described mixing is performed such that the electrode active material, the conductive material, and the fiberizable binder are uniformly distributed, and since the electrode active material, the conductive material, and the binder are mixed into a powder phase, various methods can be used without limitation as long as the methods can simply mix the electrode active material, the conductive material, and the binder. However, in the present invention, a dry electrode is manufactured without using a solvent, the mixing may be performed by dry mixing, and the above-described materials may be introduced into an apparatus such as a mixer or a blender to be mixed.

At this time, the mixing may be performed in a mixer at 500 rpm to 100,000 rpm for 0.5 minutes to 30 minutes, and specifically, may be performed at 1000 rpm to 20,000 rpm for 2 minutes to 15 minutes. If performed in the above-described range, the above-described materials may be uniformly mixed, which may improve the performance of a battery.

Next, a fiberization process for fiberizing the fiberizable binder may be performed on the mixture composition obtained in the above-described mixing.

The fiberization process is not particularly limited as long as it is commonly performed mixing, but preferably, may be performed by high temperature-low shear kneading (kneading), and may be performed, for example, through a kneader. The fiberizable binder is fiberized by the above-described kneading, thereby bonding or connecting the electrode active material and the conductive material powder to each other to form a mixed aggregate with a solid content of 100%.

The kneading may be performed at a rate of 10 rpm to 100 rpm, and specifically, may be performed at a rate of 20 rpm to 70 rpm. In addition, the kneading may be performed for 1 minute to 120 minutes, and specifically, may be performed for 2 minutes to 60 minutes. If the above-described range is satisfied, adequate fiberization may be achieved to improve the properties of a battery.

At this time, in the case of kneading the mixture composition to prepare the powder for a first electrode, the kneading may be performed for a shorter period of time than in the case of kneading the mixture composition to prepare the powder for a second electrode. If the above-described condition is satisfied, the mixture composition for preparing the powder for a first electrode is less fiberized, so that the crystallinity of the binder included in the powder for a first electrode to be prepared later may be higher than the crystallinity of the binder included in the powder for a second electrode to be prepared later.

Specifically, in the case of kneading the mixture composition to prepare the powder for a first electrode, the kneading may be performed at a speed of 10 rpm to 100 rpm for 1 minute to 30 minutes, and in the case of kneading the mixture composition to prepare the powder for a second electrode, the kneading may be performed at a speed of 10 rpm to 100 rpm for 10 minutes to 60 minutes, and the time required for kneading the mixture composition to prepare the powder for a first electrode may be shorter than the time required for mixing the mixture composition to manufacture the powder for a second electrode. If the above-described range is satisfied, the crystallinity of the binder included in the powder for an electrode to be prepared later may be appropriately different.

In addition, the kneading may be performed under the conditions of a high temperature and a pressure equal to or higher than normal pressure, and specifically, may be performed under the condition of a pressure higher than normal pressure.

More specifically, the kneading may be performed at a temperature of 50 °C to 230 °C, preferably 90 °C to 200 °C. If the kneading is performed at a high temperature in the above-described range, the fiberization of the binder and agglomeration by the kneading may be easily achieved, and it is possible to appropriately prevent a problem of disconnection of the fiberized binder.

In addition, the kneading may be performed at a pressure equal to or higher than normal pressure, specifically, 1 atm to 3 atm, and more specifically 1.1 atm to 3 atm. If the kneading is performed in the above-described range, it is possible to adequately prevent the problem of the disconnection of the fiberized binder, and to prevent a problem in which the density of the mixed aggregate becomes too high.

That is, according to the present invention, when the high-temperature and low-shear kneading process is performed under the conditions of a high temperature and a pressure equal to or higher than normal pressure instead of performing high-shear kneading, an intended effect of the present invention may be achieved.

Next, a step of pulverizing the mixed aggregate prepared through the above-described kneading step, thereby obtaining powder for an electrode may be performed.

The mixed aggregate prepared through the above-described kneading process may be directly subjected to calendarization, but in this case, the mixed aggregate needs to be pressed with a strong pressure and at a high temperature to be manufactured into a film form, and accordingly, there may be a problem in that the density of the film becomes too high or a uniform film may not be obtained. Therefore, the mixed aggregate prepared as described above is pulverized to prepare powder-phase powder for an electrode.

An apparatus used in the above-described pulverizing is not particularly limited, but an apparatus such as a blender or a grinder may be preferably used.

The pulverizing may be performed at a speed of 5000 rpm to 20000 rpm for 5 seconds to 10 minutes, preferably at a speed of 8000 rpm to 18000 rpm for 10 seconds to 5 minutes. If the pulverizing is performed in the above-described range, the pulverizing is sufficiently achieved, thereby preparing powder of an adequate size to be made into a film, and fine powder may not be generated in a large amount from the mixed aggregate.

At this time, in the case of pulverizing the mixed aggregate to prepare the powder for a first electrode, the pulverizing may be performed for a longer period of time than in the case of pulverizing the mixed aggregate to prepare the powder for a second electrode. If the above-described conditions are satisfied, the crystallinity of the powder for a first electrode to be prepared later may be higher than the crystallinity of the powder for a second electrode to be prepared later.

Specifically, in the case of pulverizing the mixed aggregate to prepare the powder for a first electrode, the pulverizing may be performed at a speed of 5000 rpm to 20000 rpm for 10 seconds to 5 minutes, preferably at a speed of 8000 rpm to 18000 rpm for 30 seconds to 3 minutes, and in the case of pulverizing the mixed aggregate to prepare the powder for a second electrode, the pulverizing may be performed at a speed of 5000 rpm to 20000 rpm for 1 second to 2 minutes, specifically at a rate of 8000 rpm to 18000 rpm for 5 seconds to 50 seconds. If the above-described range is satisfied, the crystallinity of the binder in the central portion and side portions of the electrode mixture film to be manufactured may be appropriately adjusted, so that it is possible to reduce defective portions formed in the side portion and to improve the tensile strength and elongation at break of the electrode mixture film.

Next, Step (S2) is performed on the powder for a first electrode and the powder for a second electrode to manufacture an electrode mixture film.

(Step (S2))

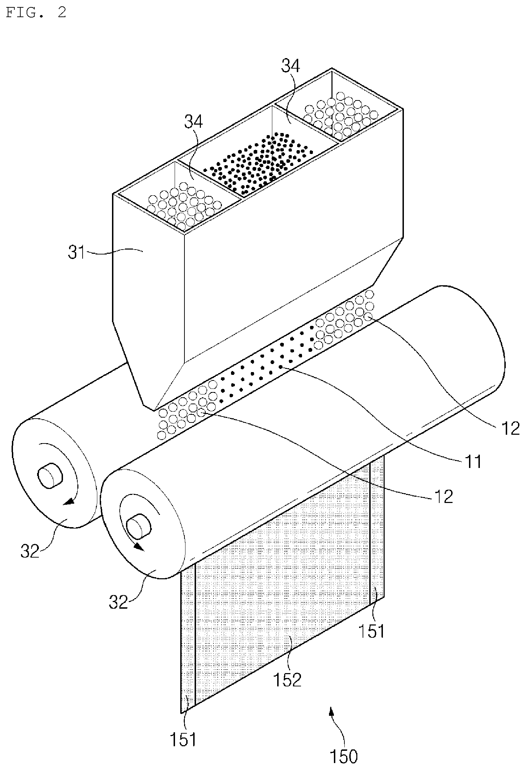

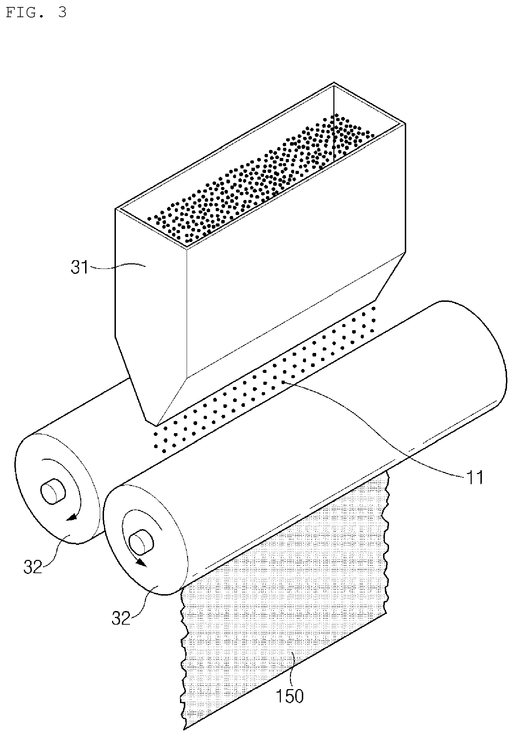

Referring to FIGS. 2 and 3, Step (S2) will be described in detail.

Step (S2) includes a step of introducing the powder for a first electrode and the powder for a second electrode to a calendar roll divided into three or more partitions in a width direction by a dam, and is a step in which the powder for a first electrode is introduced to a central portion of the roll of the (S2) above, and the powder for a second electrode is introduced to a side portion positioned at both ends of the central portion of the roll to manufacture an electrode mixture film.

An electrode mixture film may be manufactured by a calendaring method in which the powder for the first electrode 11 and the powder for the second electrode 12 prepared in Step (S1) above are supplied to a calendar device, and the supplied materials are thermally pressed using a roll press (es) included in the calendar device. At this time, the powder for the first electrode 11 and the powder for the second electrode 12 may be supplied to the calendar roll through separate introduction paths, respectively. For example, the introduction path of the powder for the second electrode 12 may be set to be on both sides of the introduction path of the powder for the first electrode 11. In addition, the powder for the first electrode 11 introduced to the central portion and the powder for the second electrode 12 introduced to the side portions may be connected to each other at the boundary surface therebetween in the calendaring step. To this end, the division of the introduction paths is set to be achieved in a front stream of the calendar device, and materials introduced into the calendar device have boundaries overlapping each other, so that the powder for the first electrode 11 and the powder for the second electrode 12 may be connected to each other at a boundary surface. The division of the introduction paths may be achieved by disposing a dam in a front stream of a calendar roll to separate the introduction paths.

Referring to FIG. 2 and FIG. 3, the calendar roll divided into three or more partitions in a width direction by the dam may be divided into three partitions in the width direction by the dam by being provided with a supply part 31 including a guide dam 33 or a partition dam 34 in front of a calendar roll 32. As in above-described method, the introduction paths of the powder for the first electrode 11 and the powder for the second electrode 12 are divided into a roll central portion to which the powder for the first electrode 11 is to be introduced and a roll side portion into which the powder for the second electrode 12 is to be introduced, so that a side portion of an electrode mixture film to be manufactured later may have low crystallinity and a central portion thereof may have high crystallinity. After passing through the divided introduction paths, the powder for the first electrode 11 and the powder for the second electrode 12 may be combined at a divided boundary surface, so that at the boundary surface, the powder for the first electrode 11 and the powder for the second electrode 12 may be mixed to some degree. In addition, in the case of the boundary surface, the powder for an electrode respectively present in the central portion and the side portion are applied with a shear force, and thus, are combined to form the boundary surface, so that the central portion and the side portion may not be separated from each other.

At this time, the central portion of the electrode mixture film mainly contains the powder for the first electrode 11, and the side portion of the electrode mixture film mainly contains the powder for the second electrode 12. The term 'mainly' above means that the content is more than 50 wt%.

The lengths of the side portions positioned at both ends of the central portion of the roll may each independently be 1% to 45%, specifically 2% to 30%, and more specifically 3% to 25% of the length of the central portion of the roll. If the above-described range is satisfied, an appropriate amount of the powder for the first electrode 11 may be introduced into a central portion of an electrode mixture film to be manufactured later, and an appropriate amount of the powder for the second electrode 12 may be introduced into side portions of the electrode mixture film, so that it is possible to manufacture an electrode mixture film with excellent tensile strength and elongation at break while reducing defective portions formed in the side portions.

The powder for the first electrode 11 and the powder for the second electrode 12 are supplied to the calendar roll, and thermally pressed to prepare an electrode mixture film in a sheet form. At this time, the temperature of the calendar roll may be 50 °C to 200 °C.

The calendar roll includes a roll press part in which two rollers are disposed to face each other, and the roll press part may be disposed in plurality successively. At this time, in each roll press part, the rotation speed ratio of the two rollers may each independently be adjusted appropriately within 1:1 to 1:10.

In addition, in order to adjust the manufactured electrode mixture film to an adequate thickness, the electrode mixture film may be introduced into the roll-press part again and be thermally compressed 1 time to 10 times.

At this time, the manufacturing method may further include (S3) removing an edge portion of a film manufactured after the (S2) above, wherein the edge portion is positioned at both ends in a width direction of an electrode mixture film manufactured after the (S2) above, and the widths of the edge portions are each independently 10% or less of the width length of the electrode mixture film manufactured after Step (S2) above.

The widths of the edge portions may each independently be 10% or less, specifically 8% or less, more specifically 6% or less, and even more specifically 3% or less of the width length of the electrode mixture film manufactured after Step (S2). If the above-described range is satisfied, unlike in a typical process, an electrode mixture film with a wider width may be obtained from a calendar roll having a limited width, so that the processability may be excellent. In addition, the edge portion is included in the side portion, and the length of the edge portion and the length of the side portion are the same, so that it is not necessary to remove the entire side portion.

Depending on the width of the edge portion, the width of the side portion may be reduced.

The removed edge portion may be recycled as the powder for a second electrode.


**Dry electrode**


A dry electrode according to the present invention includes the above-described electrode mixture film of the present invention. Specifically, the dry electrode may include a current collector, and the electrode mixture film formed on the current collector. Since the electrode mixture film has been described above, a detailed description thereof will be omitted, and hereinafter, only the rest of the components will be described in detail.

The electrode may be manufactured by stacking the electrode mixture film on one side or both sides of a current collector and laminating the resulting product. The lamination may be a step of roll-pressing, thereby attaching the electrode mixture film onto the current collector. The lamination may be performed by a roll press method using a lamination roller, and at this time, the lamination roller may be maintained at a temperature of 20 °C to 200 °C.

If the dry electrode is a positive electrode, the current collector may be any one having conductivity without causing a chemical change in the corresponding battery, and is not particularly limited. For example, as the current collector, stainless steel, aluminum, nickel, titanium, fired carbon, or aluminum or stainless steel that is surface-treated with one of carbon, nickel, titanium, silver, and the like may be used.

The thickness of the current collector may be from 8 $\mu$m to 500 $\mu$m, but is not limited thereto. In addition, microscopic irregularities may be formed on the surface of the current collector to improve adhesion of the electrode mixture film.

If the dry electrode is a negative electrode, the current collector is not particularly limited as long as it has high conductivity without causing a change in the battery, and for example, copper, stainless steel, aluminum, nickel, titanium, fired carbon, copper or stainless steel that is surface-treated with one of carbon, nickel, titanium, silver, and the like, an aluminum-cadmium alloy, or the like may be used.

The electrode current collector may typically have a thickness of 3 $\mu$m to 500 $\mu$m, and as in the case in which the dry electrode is used as a positive electrode, microscopic irregularities may be formed on the surface of the current collector to increase the adhesion of the electrode mixture film.

The current collector may be entirely or partially coated with a conductive primer for lowering resistance and improving adhesion on the surface. Herein, the conductive primer may include a conductive material and a binder, wherein the conductive material is not limited as long as it is a material having conductivity, but may be, for example, a carbon-based material. The binder may include a fluorine-based binder (including PVDF and PVDF copolymer), an acrylic-based binder, and an aqueous binder, which may be dissolved in a solvent.

**Lithium secondary battery**

Hereinafter, a lithium secondary battery according to the present invention will be described.

The lithium secondary battery according to the present invention includes a dry electrode according to the present invention. Specifically, the lithium secondary battery includes a positive electrode, a negative electrode, a separator, and an electrolyte, wherein the positive electrode and/or the negative electrode may be a dry electrode, and specifically, the lithium secondary battery may be a lithium secondary battery including the dry electrode according to the present invention, a negative electrode, a separator, and an electrolyte. If only one of the positive electrode and the negative electrode is the dry electrode according to the present invention, the other electrode may be an electrode manufactured by a typical wet manufacturing method.

The separator is to separate the negative electrode and the positive electrode and to provide a movement path for lithium ions. Any separator may be used without particular limitation as long as it is a separator commonly used in a lithium secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a lithium secondary battery, but the electrolyte is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components. At this time, the additive may be included in an amount of 0.1 wt% to 10.0 wt% based on the total weight of the electrolyte.

In addition, the lithium secondary battery according to the present invention stably exhibits excellent discharge capacity, output properties, and capacity retention rate stably, and thus, is useful for portable devices such as mobile phones, laptop computers, and digital cameras, and in the field of electric vehicles such as hybrid electric vehicles (HEVs).

Accordingly, according to another embodiment of the present invention, a battery module including the lithium secondary battery as a unit cell, and a battery pack including the battery module are provided.

The battery module or the battery pack may be used as a power source for a power tool, an electric car including an electric vehicle (EV), a hybrid electric vehicle, and a plug-in hybrid electric vehicle (PHEV), or one or more medium-to-large devices in a system for power storage.

Hereinafter, embodiments of the present invention will be described in detail so that those skilled in the art may easily carry out the present invention. However, the present invention may be embodied in many different forms, and is not limited to the embodiments set forth herein.

Hereinafter, the present invention will be described in more detail with reference to specific examples.

**Preparation Examples, Examples, and Comparative Examples**

**Preparation Example 1: Preparation of powder for first electrode**

940 g of lithium iron phosphate (LFePO$_4$, Aleees Corp., M121, D$_{50}$ 2.2 μm) as a positive electrode active material, 20 g of carbon black as a conductive material, and 40 g of polytetrafluoroethylene (PTFE) as a binder were introduced into a blender (Hanil Corp, SHMF-3260S) and mixed at a rotation speed of 10000 rpm for 10 minutes to prepare a mixture composition.

The mixture composition was introduced into a kneader (Hanil Corp.) and kneaded at a rotation speed of 25 rpm at a temperature of 150 °C for 5 minutes to prepare a mixed aggregate.

The mixed aggregate was introduced into a blender (Hanil Corp, SHMF-3260S) and pulverized at a rotation speed of 10000 rpm for 1 minute to prepare powder for a first electrode.

**Preparation Example 2: Preparation of powder for second electrode**

Powder for a second electrode was prepared in the same manner as in the preparation method of the powder for a first electrode, except that a mixed aggregate was prepared by kneading the mixture composition at a rotation speed of 50 rpm at a temperature of 150 °C for 20 minutes, and the mixed aggregate was introduced into a blender and pulverized at a rotation speed of 10000 rpm for 20 seconds.

**Example 1: Manufacturing of electrode mixture film**

The powder for a first electrode prepared in Preparation Example 1 above was introduced into a central portion of a calendar roll, and the powder for a second electrode prepared in Preparation Example 2 above was introduced into each of side portions of the calendar roll to prepare an electrode mixture film.

At this time, the calendar roll had a diameter of 88 mm, a temperature of 100 °C, and a roll speed ratio of 20/24 rpm, wherein the width of the central portion of the calendar roll was 280 mm, and the width of each of the side portions of the calendar roll was 10 mm.

**Example 2: Manufacturing of electrode mixture film**

An electrode mixture film was manufactured in the same manner as in Example 1, except that the width of the central portion of the calendar roll was 240 mm, and the width of each of the side portions of the calendar roll was 30 mm.

**Example 3: Manufacturing of electrode mixture film**

An electrode mixture film was manufactured in the same manner as in Example 1, except that the width of the central portion of the calendar roll was 200 mm, and the width of each of the side portions of the calendar roll was 50 mm.

**Comparative Example 1: Manufacturing of electrode mixture film**

Only the powder for a first electrode of Example 1 was introduced into a calendar roll to prepare an electrode mixture film.

At this time, the calendar roll had a diameter of 88 mm, a temperature of 100 °C, and a roll speed ratio of 20/24 rpm.

**Comparative Example 2: Manufacturing of electrode mixture film**

Only the powder for a second electrode of Example 1 was introduced into a calendar roll to prepare an electrode mixture film.

At this time, the calendar roll had a diameter of 88 mm, a temperature of 100 °C, and a roll speed ratio of 20/24 rpm.

The preparation methods of the electrode mixture films prepared in Examples 1 to 3 and Comparative Examples 1 and 2 are summarized in [Table 1] below.

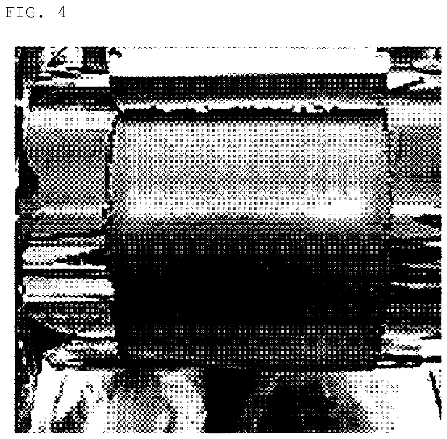

Pictures of the electrode mixture films prepared in Examples 1 and 3 and Comparative Example 1 are respectively shown in [FIG. 4] to [FIG. 6].

[Table 1]

| | Types of powder for electrode introduced into calendaring roll | | Roll central portion width (mm) | Roll side portion width (mm) |
|---|---|---|---|---|
| Example 1 | Center portion | Powder for first electrode | 280 | 10 |
| | Side portion | Powder for second electrode | | |
| Example 2 | Center portion | Powder for first electrode | 240 | 30 |
| | Side portion | Powder for second electrode | | |
| Example 3 | Center portion | Powder for first electrode | 200 | 50 |
| | Side portion | Powder for second electrode | | |
| Comparative Example 1 | Powder for first electrode | | 300 | 0 |
| Comparative Example 2 | Powder for second electrode | | 300 | 0 |

**Experimental Example 1: Measurement of crystallinity of powder for electrode, and binder in central portion and side portions of electrode mixture film**

Using differential scanning calorimetry (DSC), the crystallinity of each of the powder for a first electrode prepared in Preparation Example 1 and the powder for a second electrode powder prepared in Preparation Example 2, and the crystallinity of the binder in the center portion and side portions of the electrode mixture film manufactured in each of Examples 1 to 3 and Comparative Examples 1 and 2 were calculated according to [Equation 1] described above.

Specifically, 15 mg of a sample was introduced into a differential scanning calorimeter (DSC) manufactured by TA Corp., and while raising the temperature at a rate of 10 °C/min in the temperature range of 25 °C to 370 °C under a nitrogen atmosphere, heat of fusion ($\Delta$heat of fusion) according to the temperature was measured, and then using the TROIS program of TA Corp., the melting point (Tm) and an enthalpy of melting ($\Delta H_m$) were analyzed based on the temperature (peak temperature) at a point of time at which the highest enthalpy was exhibited during melting.

The crystallinity of each sample was calculated by [Equation 1] above in which an enthalpy of melting ($\Delta H_m$) value actually measured by DSC is divided by an enthalpy of melting ($\Delta H_m^O$) value of a theoretically perfect crystal (100% crystallinity), and expressing as a %. An enthalpy of melting value of a PTFE theoretically perfect crystal was set to 85.4 J/g (Polymer Journal Vol. 46, 8872~8882, 2005).

The measurement results are shown in [Table 2] and [Table 3] below.

[Table 2]

| | Binder crystallinity (%) |
|---|---|
| First electrode mixture film powder | 24.6 |
| Second electrode mixture film powder | 3.1 |

[Table 3]

| | Binder crystallinity included in central portion (%) | Binder crystallinity included in side portion (%) |
|---|---|---|
| Example 1 | 21.7 | 1.1 |

(continued)

|  | Binder crystallinity included in central portion (%) | Binder crystallinity included in side portion (%) |
| --- | --- | --- |
| Example 2 | 20.2 | 0.7 |
| Example 3 | 16.3 | 0.8 |
| Comparative Example 1 | 20.5 | 21.2 |
| Comparative Example 2 | 0.5 | 0.6 |

**Experimental Example 2: Measurement of width of side defective portion and normal portion of electrode mixture film**

The electrode mixture films manufactured by each of Examples 1 to 3 and Comparative Examples 1 and 2 were externally observed in appearance to measure the width of a defective portion formed in a side portion and the width of a normal portion. Specifically, the width of the normal portion was measured by measuring the width of an electrode mixture film between an MD direction parallel line passing a point at which a sawtooth-shaped defective portion of one side surface was formed deepest, and an MD direction parallel line passing a point at which the sawtooth-shaped defective portion of the other side surface was formed deepest, and the width of the defective portion formed in the side portion was obtained by measuring an average length from an end on one side of the width of the normal portion to the outermost portion of the sawtooth-shaped defective portion.

The measurement results are shown in [Table 4] below.

[Table 4]

|  | Side defective portion width (mm) | Normal portion width (mm) |
| --- | --- | --- |
| Example 1 | 8 | 300 |
| Example 2 | 6 | 300 |
| Example 3 | 6 | 300 |
| Comparative Example 1 | 39 | 280 |
| Comparative Example 2 | 6 | 300 |

As can be confirmed from [Table 4] above, it can be confirmed that Examples 1 to 3 have a significantly reduced width of a side defective portion, unlike Comparative Example 1 which used only the powder for a first electrode.

**Experimental Example 3: Measurement of tensile strength and elongation at break of electrode mixture film**

The electrode mixture films manufactured in Examples 1 to 3 and Comparative Examples 1 and 2 were cut to a size of 70 x 10 mm, and then the tensile strength thereof was measured using a tensile strength tester (UTM equipment manufactured by ZwickRoell Corp.) in an ASTM 638 manner. At this time, the tensile strength was measured 10 times at a tensile rate of 50 mm/min and a pre-load of 0.01 kg/cm, and the measurement results were averaged and shown.

During the measurement of the tensile strength above, the length was measured at a point of time at which there was breakage, and the elongation at break was calculated by multiplying (length at break - length of initial sample) /length of initial sample by 100.

The measurement results are shown in [Table 5] below.

[Table 5]

|  | Tensile strength (MPa) | Elongation at break (%) |
| --- | --- | --- |
| Example 1 | 0.55 | 4.5 |
| Example 2 | 0.54 | 4.3 |
| Example 3 | 0.49 | 4.2 |
| Comparative Example 1 | 0.54 | 4.4 |

(continued)

|  | Tensile strength (MPa) | Elongation at break (%) |
|---|---|---|
| Comparative Example 2 | 0.42 | 1.3 |

As can be confirmed from [Table 2] above, it can be confirmed that Examples 1 to 3 are excellent in both tensile strength and elongation at break, unlike Comparative Example 2 which used only the powder for a second electrode.

[Description of the Reference Numerals or Symbols]

11: Powder for first electrode

12: Powder for second electrode

31: Supply part

32: Calendar roll

33: Guide dam

34: Partition dam

150: Electrode mixture film

151: Electrode mixture film side portion

152: Electrode mixture film central portion.

**Claims**

1. An electrode mixture film comprising an electrode active material, a conductive material, and a fiberizable binder, wherein the electrode mixture film includes: a side portion positioned at both ends in a width direction of the electrode mixture film; and a central portion disposed between the side portions, and the crystallinity of a binder included in the central portion is higher than the crystallinity of a binder included in the side portions.

2. The electrode mixture film of claim 1, wherein the widths of the side portions are each independently 0.1% to 40% of the width of the electrode mixture film from both ends in the width direction of the electrode mixture film.

3. The electrode mixture film of claim 1, wherein the crystallinity of the binder included in the central portion is 5% to 40%.

4. The electrode mixture film of claim 1, wherein the crystallinity of the binder included in the side portions is 4.5% or less.

5. The electrode mixture film of claim 1, wherein the electrode active material has an average particle diameter ($D_{50}$) of 0.1 $\mu$m to 5.0 $\mu$m.

6. A method for manufacturing an electrode mixture film, the method comprising:

   (S1) a step of obtaining each of powder for a first electrode and powder for a second electrode, each of which includes an electrode active material, a conductive material, and a fiberizable binder; and
   (S2) a step of introducing the powder for a first electrode and the powder for a second electrode to a calendar roll divided into three or more partitions in a width direction by a dam,
   wherein the crystallinity of the binder included in the powder for a first electrode of the (S1) above is higher than the crystallinity of the binder included in the powder for a second electrode thereof, and the powder for a first electrode is introduced to a central portion of the roll of the (S2) above, and the powder for a second electrode is introduced to a side portion positioned at both ends of the central portion of the roll.

7. The method of claim 6, wherein the calendar roll in the (S2) above is divided into three partitions in the width direction by the dam, and the lengths of the side portions are each independently 1% to 45% of the length of the central portion.

8. The method of claim 6, wherein the lengths of the side portions are each independently 2% to 30% of the length of the central portion.

9. The method of claim 6, wherein the powder for a first electrode and the powder for a second electrode are each independently prepared by a method including:

   (a) a step of preparing a mixture composition including an electrode active material, a conductive material, and a fiberizable binder; and
   (b) a step of kneading the mixture composition under a temperature condition of 70 °C to 200 °C to prepare a mixed aggregate.

10. The method of claim 9, wherein the kneading of the (b) above is performed at a rotation speed of 100 rpm or less at a temperature of 70 °C to 200 °C.

11. The method of claim 9, wherein kneading is performed for a shorter period of time to prepare the powder for a first electrode than to prepare the powder for the second electrode.

12. The method of claim 6, wherein the crystallinity of the binder included in the powder for a first electrode is from 5% to 40%, and the crystallinity of the binder included in the powder for a second electrode is from 8% or less.

13. The method of claim 6, further comprising (S3) being a step of removing an edge portion of a film manufactured after the (S2) above, wherein the edge portion is positioned at both ends in a width direction of an electrode mixture film manufactured after the (S2) above, and the widths of the edge portions are each independently 10% or less of the width length of the electrode mixture film manufactured after Step the (S2) above.

14. A lithium secondary battery comprising a dry electrode including the electrode mixture film of claim 1.

FIG. 1

FIG. 2

FIG. 3

FIG. 4

FIG. 5

FIG. 6

## INTERNATIONAL SEARCH REPORT

| | International application No. |
|---|---|
| | **PCT/KR2024/015690** |

| A. | CLASSIFICATION OF SUBJECT MATTER |
|---|---|

**H01M 4/13**(2010.01)i; **H01M 4/139**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); H01G 11/86(2013.01); H01M 10/052(2010.01); H01M 10/0525(2010.01); H01M 4/1393(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 합재(electrode mixture), 필름(film), 리튬 이차 전지(lithium secondary battery), 바인더(binder), 결정화도(crystallinity), 사이드부(side part), 균열(crack)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0022038 A (LG ENERGY SOLUTION, LTD.) 14 February 2023 (2023-02-14)<br>See abstract; paragraphs [0045], [0061], [0065], [0103], [0115], [0117], [0119] and [0144]; and figures 3a and 3b. | 1-14 |
| A | JP 2014-203572 A (NISSAN MOTOR CO., LTD.) 27 October 2014 (2014-10-27)<br>See paragraphs [0031] and [0032]. | 1-14 |
| A | KR 10-2019-0053121 A (LG CHEM, LTD.) 17 May 2019 (2019-05-17)<br>See claims 1-11. | 1-14 |
| A | KR 10-2023-0022129 A (LG ENERGY SOLUTION, LTD.) 14 February 2023 (2023-02-14)<br>See claims 1-20. | 1-14 |
| A | KR 10-2020-0138263 A (MAXWELL TECHNOLOGIES, INC.) 09 December 2020 (2020-12-09)<br>See claims 1-18. | 1-14 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 January 2025** | **17 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015690**

| Patent document cited in search report | | | Publication date (day/month/year) | Patent family member(s) | | | Publication date (day/month/year) |
|---|---|---|---|---|---|---|---|
| KR | 10-2023-0022038 | A | 14 February 2023 | CN | 117378058 | A | 09 January 2024 |
| | | | | EP | 4318650 | A1 | 07 February 2024 |
| | | | | JP | 2024-508512 | A | 27 February 2024 |
| | | | | US | 2024-0274780 | A1 | 15 August 2024 |
| | | | | WO | 2023-014126 | A1 | 09 February 2023 |
| JP | 2014-203572 | A | 27 October 2014 | JP | 6209844 | B2 | 11 October 2017 |
| KR | 10-2019-0053121 | A | 17 May 2019 | CN | 110431690 | A | 08 November 2019 |
| | | | | CN | 110431690 | B | 02 September 2022 |
| | | | | EP | 3579308 | A1 | 11 December 2019 |
| | | | | EP | 3579308 | B1 | 05 January 2022 |
| | | | | JP | 2020-509559 | A | 26 March 2020 |
| | | | | JP | 7038949 | B2 | 22 March 2022 |
| | | | | KR | 10-2024-0037909 | A | 22 March 2024 |
| | | | | KR | 10-2646711 | B1 | 12 March 2024 |
| | | | | PL | 3579308 | T3 | 04 April 2022 |
| | | | | US | 11728507 | B2 | 15 August 2023 |
| | | | | US | 2020-0014056 | A1 | 09 January 2020 |
| KR | 10-2023-0022129 | A | 14 February 2023 | CA | 3227840 | A1 | 09 February 2023 |
| | | | | CN | 117597792 | A | 23 February 2024 |
| | | | | JP | 2024-519967 | A | 21 May 2024 |
| | | | | KR | 10-2661426 | B1 | 26 April 2024 |
| | | | | WO | 2023-014127 | A1 | 09 February 2023 |
| KR | 10-2020-0138263 | A | 09 December 2020 | CN | 111919315 | A | 10 November 2020 |
| | | | | CN | 111919315 | B | 30 January 2024 |
| | | | | CN | 117855484 | A | 09 April 2024 |
| | | | | EP | 3776696 | A1 | 17 February 2021 |
| | | | | JP | 2021-519495 | A | 10 August 2021 |
| | | | | JP | 2024-037911 | A | 19 March 2024 |
| | | | | JP | 7474703 | B2 | 25 April 2024 |
| | | | | US | 11545666 | B2 | 03 January 2023 |
| | | | | US | 11811066 | B2 | 07 November 2023 |
| | | | | US | 2019-0305316 | A1 | 03 October 2019 |
| | | | | US | 2023-0075404 | A1 | 09 March 2023 |
| | | | | US | 2024-0154128 | A1 | 09 May 2024 |
| | | | | WO | 2019-191397 | A1 | 03 October 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230138115

**Non-patent literature cited in the description**

- *Polymer Journal*, 2005, vol. 46, 8872-8882